(19) **Europäisches Patentamt**
European Patent Office
Office européen des brevets

(11) **EP 4 173 477 A1**

(12) **EUROPEAN PATENT APPLICATION**

(43) Date of publication:
 **03.05.2023 Bulletin 2023/18**

(21) Application number: **21020540.7**

(22) Date of filing: **02.11.2021**

(51) International Patent Classification (IPC):
 *A01G 25/16* *(2006.01)*

(52) Cooperative Patent Classification (CPC):
 **A01G 25/167**

(84) Designated Contracting States:
 **AL AT BE BG CH CY CZ DE DK EE ES FI FR GB GR HR HU IE IS IT LI LT LU LV MC MK MT NL NO PL PT RO RS SE SI SK SM TR**
 Designated Extension States:
 **BA ME**
 Designated Validation States:
 **KH MA MD TN**

(71) Applicant: **DATAVERSE Information Systems and Applications Ltd**
 **55134 Kalamaria (GR)**

(72) Inventors:
 • **Shianios, Loizos**
  **15231 Chalandri-Attica (GR)**
 • **Athanitis, Dionysis**
  **15231 Chalandri-Attica (GR)**

(54) **METHOD AND DEVICE FOR OPTIMISATION OF COLLECTION & PROCESSING OF SOIL MOISTURE DATA TO BE USED IN AUTOMATIC INSTRUCTIONS GENERATION FOR OPTIMAL IRRIGATION IN AGRICULTURE**

(57) The present invention refers to a combinational method for calculating soil moisture at any time and at different depths, using machine learning algorithms in various phases and steps of the proposed method, which aims at eliminating the sustainability problems embedded in the detailed recording of soil moisture method, based on on-site measurements with sensors in numerous points within a given field and at different depths.

This goal is achieved in the first phase by the combinational use of:
- a) data from on-site field measurements obtained by a specific sensor-based method
- b) data extracted from targeted satellite captures and
- c) climatic conditions recording and forecasting data, used for neural networks training, which allow for gradual phasing out of recording and forecasting data resulting from on-site measurements and use of data deriving exclusively from satellite imagery.

With the use of this method, conditions for gradual abolition of on-site field measurements using sensors are met, thus drastically reducing the overall operation and maintenance cost for estimating soil moisture in a given cultivated area at any given time.

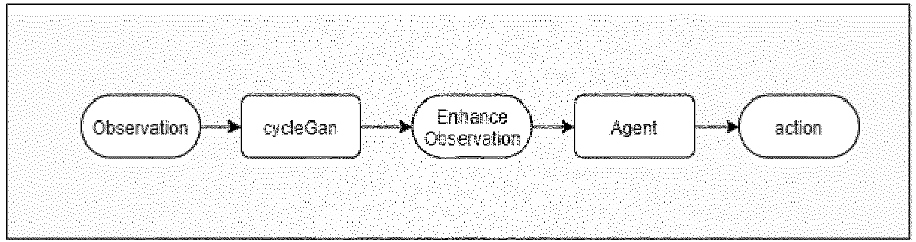

## Description

### 1 Related Technical field

The use of special sensors in fields for on-site measurement of climatic data and in particular data related to the formation of soil moisture at various depths, which are connected through telecommunication protocols (such as 4G, LoRa, Wi-Fi, 5G NR, C - band, 60 GHz, CBRS, etc.) transferring necessary data for processing to a central computing infrastructure, and in conjunction with other data related to the prediction of humidity fluctuations (rainfall, humidity and wind intensity , etc.) in order to formulate the proposed optimal irrigation program for a given crop, is, in theory, a practice that may lead to identification of irrigation needs with sufficient accuracy.

However, in practice, this method requires a large number of sensors to record humidity conditions in numerous points within a field and at different depths (from 0 - 1 m), to such an extent, that this method becomes financially unsustainable.

As far as measurement sensors are concerned, their use in practice has shown that efficient maintenance and special protection against moisture and oxidative damage is needed, to allow uninterrupted operation for a long time. Further, power supply and connectivity requirements for sending and receiving data, create additional needs and costs for long-term maintenance. On the other hand, within the past 3-4 years, due to significant advancements in relevant satellite technologies, the detailed recording capability with a capture resolution supplying a value for humidity per 100 square meters (or even smaller areas) and with a scanning frequency of 3 days for any targeted area, provides new capabilities for recording and utilisation of atmospheric and soil data in agriculture.

The aim of these methods is to accurately record soil moisture at various depths up to 1-2 meters below the field surface at any time, in order to assess irrigation needs for of each crop, as a means to optimally plan irrigation time and quantities for each point of the irrigated area. The present invention refers to a combinational method for calculating soil moisture at any time and at different depths, using machine learning algorithms in various phases and steps of the proposed method, which aims at eliminating the aforementioned sustainability problems embedded in the detailed recording of soil moisture method, based on on-site measurements with sensors in numerous points within a given field and at different depths.

This goal is achieved in the first phase by the combinational use of:

- a) data from on-site field measurements obtained by a specific sensor-based method
- b) data extracted from targeted satellite captures and
- c) climatic conditions recording and forecasting data,

used for neural networks training, which allow for gradual phasing out of recording and forecasting data resulting from on-site measurements and use of data deriving exclusively from satellite imagery and climatic records and forecasts.

With the use of this method, conditions for gradual abolition of on-site field measurements using sensors are met, thus drastically reducing the overall operation and maintenance cost for estimating soil moisture in a given cultivated area at any given time.

The method involves the execution of specific actions involving two types of neural networks. The first network is a cycleGAN network, which creates enhanced moisture indices when trained. During its training, in situ measurements of soil moisture are used and the network is trained to improve the indices of overall observation set, based on these measurements. CycleGAN networks can capture attributes of one data set and translate them into attributes of another data set, without the need for paired examples between these data sets. This is very useful when we want to capture information contained in a sensor measurement data set and store it in the neural network parameters. This network can in turn receive only remote sensing data and generate new observations, enhanced by the information embedded in the network from the sensor data.

The second network is a recurring neural network (RNN), which has been trained using Reinforcement Learning methods. The neural network receives an observation as an input and generates an action, in this case instruction for irrigation of the cultivated area per cultivated tree / plant.

### 2 State-of-the-art and evaluation

Information on spatio-temporal variability of soil moisture, i.e. timely availability of accurate information on soil moisture on a regular basis, is valuable for many purposes, including: drought monitoring, water resources management, irrigation planning, assessment of vegetation and agricultural yields dynamics, floods and heatwaves forecasting, as well as understanding the effects of climate change (Chawla, I., Karthikeyan, L., and Mishra, A. K.: A review of remote sensing applications for water security: quantity, quality, and extremes,30 Journal of Hydrology, p. 124826, https://doi.org/10.1016/j.jhydrol.2020.124826, 2020.).

A complete overview of available products and methods for the generalised measurement of moisture in upper soil layers is provided in the following recent scientific publication: "Evaluation of 18 satellite- and model-based soil moisture products using in situ measurements from 826 sensors evaluated the temporal dynamics of 18 state-of-the-art (quasi)global near-surface soil moisture products, including six based on satellite retrievals, six based on models without satellite data assimilation (referred to hereafter as "open-loop" models), and six based on models that assimilate 5 satellite soil moisture or brightness temperature data (H. E. Beck, M. Pan, D. Miralles et al), Hydrology and Earth System Sciences, May 2020.

This publication highlights the significant potential of remote sensing measurements and the small degree of deviation they present, if compared with field measurements.

Numerous products and methods have been developed in recent decades to accurately measure and calculate soil moisture, each with advantages and disadvantages. These products vary on target usage (generic or local use), spatio-temporal analysis and coverage, data sources, calculation algorithm and availability latency (applying in particular on remote sensing data). They can be broadly classified into three categories:

   ▪ (i) Products based on satellite direct active or passive microwave remote sensing;
   ▪ (ii) Hydrological models or ground surface models not including satellite data (open loop models)
   ▪ (iii) Hydrological models or ground surface models that incorporating ground moisture values deriving from satellite remote sensing or satellite microwave remote sensing and luminocity temperature observation

Numerous recent studies have evaluated these products and methods for measuring soil moisture using in situ measurements, other independent soil moisture products, green vegetation data by remote sensing, and/or rainfall data. Strong variances in spatio-temporal dynamics and accuracy were identified between these products and methods, even those using same data sources. In addition, several new or recently reprocessed products have not yet been thoroughly evaluated, while there is also uncertainty e.g., on the effectiveness of multi-sensor merging techniques, the effect of model complexity on the accuracy of soil moisture simulations, and on the extent to which model deficiencies and rainfall data quality affect the added value of data absorption.

To-date, however, the use of methods to create soil moisture calculation products utilising machine learning techniques and algorithms has been limited.

Productive integration of two-sources data to train a neural network, in order to create a new improved data set, as well as the capabilities provided by stochastic variational algorithms (CycleGAN algorithms as well as Variatonal AutoEncoder) are recent discoveries in artificial intelligence and machine learning. They have been made possible by significant technological advances in computing science, enhancing the ability to collect, process and manage large volumes of data.

CycleGAN is a type of GAN (generative adversarial network) algorithm, comprising automatic models training on image-to-image translation without the need for paired examples. Network models are unsupervisedly trained using a collection of images from the source domain and the target domain, which are not necessarily somehow related to each other. The original CycleGAN suggestion is made in «Unpaired Image-to-Image Translation using Cycle-Consistent Adversarial Networks, Zhu et al, Berkeley AI Research Laboratory, 2017 (https://arxiv.org/pdf/1703.10593.pdf, IEEE Xplore, International Conference on Computer Vision) and in «Efros, J.-Y. Z. (2020). Unpaired Image-to-Image Translation using Cycle-Consistent Adversarial Networks. Retrieved from https://arxiv.org/abs/1703.10593#» Respectively, Auto-Encoding Variational Bayes method (https://arxiv.org/pdf/1312.6114.pdf, Kingma & Welling 2014, University of Amsterdam) and Stochastic Backpropagation and Approximate Inference in Deep Generative Models (https://arxiv.org/abs/1401.4082, Danilo J. Rezende, Shakir Mohamed, Daan Wierstra, Google DeepMind) methods provide in combination important capabilities. VAE (Variational Auto-Encoders) map the input data into the parameters of a probabilistic distribution, such as the mean and variance. It can generate a continuous structured latent dataset i.e., a dataset that is not directly observed but inferred from others that are observed.

The significant evolution in accurate remote sensing capabilities provided by satellite infrastructures such as Copernicus (https://www.copernicus.eu/en/copernicus-services/land), together with the capabilities provided by modern computers to execute Artificial Intelligence and Machine Learning algorithms utilizing large data sets, provide new opportunities for research and innovation:

   ▪ in natural phenomena observation,
   ▪ in the creation of predictive models on various indicators and parameters determining crop growth and output and
   ▪ in the adoption of proactive measures to improve results.

Under these technological conditions, with the combined use of the most appropriate case-based machine learning algorithms, the method disclosed herewith has been formed. The method is innovative and directly applicable in the field, since it has already been developed experimentally and operates in real conditions, using electronic and computing devices to address the issue of irrigation optimisation in open field arboricultures.

## 3 Detailed Description - Disclosure of the Invention

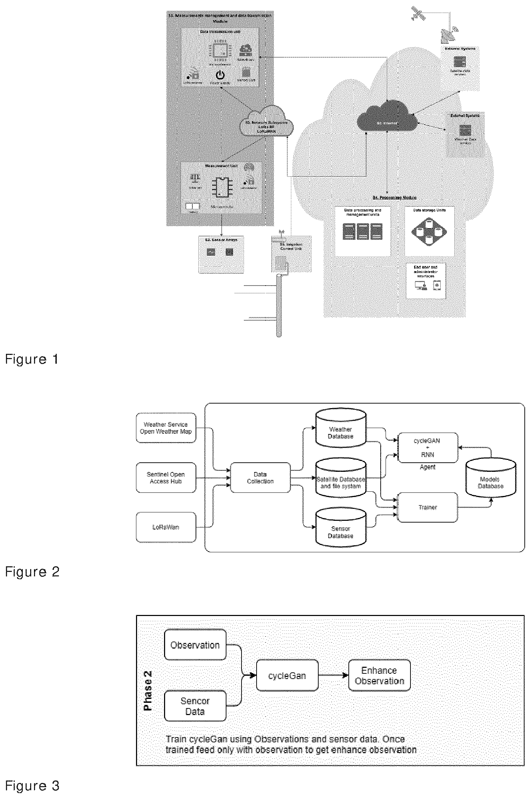

The method presented consists of a series of actions organized in steps and phases, performed in an infrastructure comprising computing and other electronic devices. Method synthesis and configuration includes computing and network devices in which developed software operates. Each device constitutes one of the subsystems forming the technical infrastructure (the overall system) which is necessary for the application of the method in practice (Figure 1).

These devices are organised into the following subsystems (Sx):

■ S1. Electronic module for initial measurements management and routing, with integrated electronic processing devices, scalable in line with the cultivated area size, placed in a protection box (Measurements Unit), connected to an array of analog sensors. Data from various measurement units are directed to a routing unit, through which they are transferred to the Internet and then to S4.

■ S2. Analog sensor arrays that are placed in the ground for data acquisition.

■ S3. Wide Area Network consisting of a local area wireless network and an internet access network or a cloud computing infrastructure.

■ S4. Computational Processing Unit, which is installed in the form of a virtual machine - VM (or an array of VMs) in a Cloud Computing Infrastructure (CCI), in which the Database stores the data and executes necessary algorithms for the application of the method.

■ S5. Irrigation Management Unit. Connected through the internet or through S3 with one or more standard electric valves controlling irrigation flows.

Datasets utilised and processed by the above subsystems fall into the following categories:

■ D1. Satellite and remote sensing data. These include

○ Raw satellite data (data from bands B04, B08 and B10)
○ Exported indices such as NDVI (Normalized Difference Vegetation Index) and NDMI (Normalized Difference Moisture Index)

■ D2. Meteorological data:

○ Historical data: average, high and low temperature, humidity percentage, daily rainfall (in millimeters), air pressure, wind direction and speed, dew point temperature.
○ Forecast data: daily forecast and forecast for following, including temperature (maximum - minimum), rainfall height, air pressure, wind direction and speed, dew point temperature.

■ D3. Cultivated area data: Geographical coordinates of polygon area, altitude, ground slopes, and critical points highlighting.
■ D4. Arboriculture data: Cultivation identity, soil moisture needs in the various life cycle phases

The system receives a set of observational data as an input, including:

■ (a) satellite remote sensing data for selected area (from Sentinel-2 data from bands B04, B08 and B10, NDVI and NDMI indicators) and
■ (b) relevant meteorological data (temperature, humidity, rainfall, wind direction and speed, dew point).

When the system is asked to provide a result, satellite data, indices and meteorological data for the last 30 days are collected and integrated in one batch. The latter comprises 6 distinct points of raw satellite data and indices (1 every 5 days), and a minimum of 30 days meteorological data.

The method embodied in the present invention consists of a series of phases comprising individual steps and actions that utilize the data and execute the algorithms. These lead to the calculation of irrigation needs for the targeted cultivated area with the specific type of cultivation, which in effect takes the form of a command given to a controlled irrigation system to supply a specific quantity of water, calculated in terms of water quantity per tree/ cultivated plant.

A detailed description of the subsystems involved follows, analyzing the development and implementation of the method, including the actions that make up the method and are organised in steps per phase.

3.1 Description of Subsystems

3.1.1 S1. Electronic module for initial measurements management and routing, with integrated electronic processing devices, placed in a protection box

The autonomous electronic module S1, integrates electronic processing and communication elements, and is placed in an IP65 grade waterproof box for protection against weather conditions. The unit is based on a microcontroller with a 32-bit dual-core processor, with a speed of up to 600 DIMPs, built-in 520 KB RAM, 4MB RAM expansion, and 8 MB external flash memory. It is powered by direct current of 3.5-5.5 volts. It possesses a number of inputs/ outputs and peripherals for connection to external analog (ADC) and digital sensors, supporting UART, I2C, and SPI protocols, while it integrates communication units for protocols WiFi 802.11b/g/n 16Mbps, Bluetooth (Classic & LE), LoRa and Sigfox.

The unit is powered by a rechargeable battery with a nominal voltage of 3.7-4.2V that ensures its uninterrupted operation for at least one (1) year,

The module is wired with an array of 3-4 analog ground sensors, placed at depths of 5, 30, 60 and 90 cm respectively. It performs periodic measurements, with a frequency of 1 recording per hour. Between measurements, the unit enters sleep mode with the aim to maximise energy savings. It switches between sleep and active mode using an internal clock.

While in active mode, the following procedures are performed:

1) The voltage/ current supply to ground sensors is activated for a duration of 250 msec, using a suitable electronic device controlled by a digital micro-controller.

2) Through another analog electronic device, the level of electrical conductivity is measured at different depths and collected. Then, the power supply to the sensors is interrupted.

3) In turn, measurements are taken from an external temperature sensor mounted on the ground at a depth of 30 cm, an internal temperature/ humidity sensor placed on the electronic board, together with metadata such as battery level.

4) The set of captured data/ metadata is formatted using an internally defined protocol in a data package (bytes), to minimise transmission time, based on a specific desired accuracy.

5) Through an integrated telecommunications unit, compatible with LoRaWAN protocol, an end-to-end connection is established with a remote private LoRaWan network installed in public Cloud infrastructure. The connection is established using cryptographic keys, ensuring integrity and security in communication (Figure 2).

6) The data package is transferred from the remote node via the LoRaWAN wireless interface, initially received by a Data Routing Unit located in the wider area (one such commercial unit is that of RAK, WisGate Edge Lite RAK7258 https://store.rakwireless.com/products/rak7258-micro-gateway?variant=39942876430534), and is directed through a Public 4G Network a UDP/ IP protocol to a Cloud infrastructure, in which S2 operates. After confirmation of successful transmission, the remote node goes into sleep mode, until it restarts for a repetitive recording cycle.

7) The data package is received by a LoRaWAN network server application, decoded to retrieve measurement data and accompanying metadata, and then forwarded using the open MQTT protocol to the routing unit where data is stored.

8) A network application undertakes to present the measurements history to interested final users (farmers, agronomists), in the form of Volumetric Flow Rate. This metric is derived from electrical conductivity measurements using mathematical equations provided by sensor manufacturer. The results are accompanied by temperature / relative humidity measurements taken from respective sensors.

### 3.1.2 S2. Sensor arrays

Commercially available analog temperature and humidity sensors are used. In the framework of the experimental device that was developed, relevant sensors from metergroup (ECH20 EC-5 https://www.metergroup.com/ environment/products/ec-5-soil-moisture-sensor/) and maxim integrated (DS18B20 https://ar.mouser.com/datasheet/ 2/256/maxim%20integrated%20products ds18b20-1178755.pdf) were used.

### 3.1.3 S3. Wide area network

The system's wide area network includes two infrastructures:

- LoRaWan network infrastructure, which covers data traffic between the units that make up for S1
- 4G network infrastructure that can be provided through any telecommunications provider, or other network infrastructure (e.g. WiFi or wired Ethernet) through which data is routed to the Internet

### 3.1.4 S4. Processing Unit (or an array thereof)

This subsystem consists of four databases and two processing elements. The databases are as follows:

- Weather Data Base
- Satellite Data Base and file system
- Sensor Data Base
- Model Database

The above databases receive data from external internet services providing meteorological and remote sensing data, as well as data from sensors (through S1 and S2). The trained models are recorded in the model database.

The Trainer subsystem receives a series of primary satellite data (B04, B08, B10), secondary data (the NDVI - Normalize Difference Vegetation Index, and NDMI - Normalize Difference Moisture Index), and sensor data as input. The Trainer is responsible to train the Agent computer subsystem.

When the subsystem is called to give an order, then the Agent requests the satellite data of the last month and the weather data of the last month. The result of the Agent is an irrigation instruction, which includes the amount of water, the time, and the duration of the irrigation process.

The Agent consists of two neural networks. The first network is a cycleGAN (Efros, 2020). This network is trained with data it receives (a- from field measurement stations placed on-site for one year and b- from Sentinel satellites) in order to provide modified secondary satellite data, with details and adapted according to field data used during training. During training, on-site measurements from sensors are used together with the rest of available data. CycleGAN neural network is capable to capture characteristics of one data set, and translate them into characteristics of another data set, without the need for pair examples between the two datasets. The subsystem has been adapted according to data attributes, and uses a version of the cycleGAN neural network, as well as the algorithm with which data attributes are extracted from sensors and transferred to remote sensing secondary data. With the use of cycleGaAN, individualised data can be generated, having only satellite data as input, as if the sensor data were also available.

The second network implemented within the subsystem is an RNN (recurrent neural network), which is trained with reinforced learning methods. It receives the cycleGan's output as input, and generates "irrigation time" and "irrigation quantity" commands towards S5.

### 3.1.5 S5. Irrigation Management & Control Unit.

Various commercially available products that can be connected to LoRaWan networks can be used for the implementation of S5, such as STREGA LoRa wireless smart valve (http://www.stregatechnologies.com/products/wireless-smart-valve/) or Milesight LoRaWAN® Solenoid Valve Controller (https://www.milesight-iot.com/lorawan/ controller/uc51x/), in which appropriate commands are provided through the system to 'open' and 'shut' the electrovalve for specific intervals in order to release the required quantity of water per tree at a time.

### 3.2 Method Phases

The method is developed in phases. In each phase, there are steps in which the various operations are included, performed within the subsystems presented above.

### 3.2.1 Phase A: Data Collection and Preparation

During Phase A, data are collected and initially processed and prepared. They are divided into the following subgroups:

### *3.2.2. 1 Remote sensing and meteorology datasets (observation datasets)*

To create this set, a combination of satellite and meteorological data provided by satellites (specifically from Sentinel 2) is made. Sentinel 2 captures the same geographical point, every 3-5 days (i.e. it makes approx. 80-100 captures annually to any given geographical area). The steps followed in this method are as follows:

- *Step 1.1*: Boundaries and cultivated area polygon edges are depicted in the form of geographical coordinates. Altitude curves and (minimum - maximum) heights within the cultivated area are identified.
- *Step 1.2*: A query is sent to Copernicus Open Access Hub, through an API. In the query, geographical coordinates of the cultivated area of interest are given, in order to retrieve, download and store in S4 Database, relevant raw data from Sentinel 2 satellite covering the past 5 years.

- *Step 1.3*: From all downloaded data, the bands B04, B08 and B10, are selected, comprising the first three channels from the remote sensing datasets.
- *Step 1.4*: NDVI (normalized difference vegetation index) and NDMI (normalized difference moisture index) are calculated for the timeframe covered by the available data,

$$NDVI = \frac{B08 - B04}{B08 + B04}$$

$$NDMI = \frac{B10 - B04}{B10 + B04}$$

These are two additional channels completing the remote sensing dataset.

- *Step 1.5*: Meteorological data related to the cultivated area of interest are collected through an external meteorological data provision system (indicatively https://openweathermap.org/). Thus, the last channel participating in the remote sensing dataset is formed. Downloaded data comprise the following variables:

  - Mean, highest, lowest temperature (in Celsius)
  - Humidity percentage
  - Rain volume (in mm)
  - Air Pressure (in hPa)
  - Wind speed (in Km/h)
  - Wind direction (in degrees)
  - Dew point (in Celsius)

- *Step 1.6*: For each available date (i.e. every 3-5 days), historically for 5 years, raw satellite data and calculated indicators are stacked, creating a 3D tensor, in a similar way that a color (three-channel-RGB) image is encoded. For the same intervals and for the specific days when the satellite data is available (i.e. every 3-5 days) and for the same 5-year period, the meteorological datasets are stacked in a vector of magnitude 5. At the end, each layer of satellite data is paired with the corresponding vector of meteorological data.

The above steps are performed and coordinated by software operating within S4 and specifically in Data Collection.

### *3.2.2.2 On-site sensors datasets*

Soil moisture and temperature data are collected for a period of one year, to form a dataset of field measurements.

- *Step 1.7*: Soil humidity measurement sensors are installed at depths of 30, 60, and 90 cm, and ground temperature measurement sensors are installed at a depth of 30 cm. Measurements are taken per hour. The placement of sensors in the cultivated area of interest is performed using the following method: a) the lowest and highest altitude points, as well as 1-3 intermediary points are selected b) in these points the nearest trunk is located and a group of sensors is placed at a distance of 30 cm from the trunk and one at the edge of the tree crown (approximately 3 meters from the trunk) at a point not shaded by the tree crown.
- *Step 1.8*: For each layer on each date, data from each sensor are transformed into vectors with magnitude 24

3.2.2 Phase B: Initial System Training

During this phase, the neural network configuration algorithm (cycleGAN) is trained to generate upgraded and improved remote sensing data, from genuine remote sensing data and data from field measurements with sensors.

The method adapts cycleGAN algorithm, utilising remote sensing data and measurement data from sensors, through th following steps:

*Step 2.1*: Remote sensing datasets and on-site measurements' datasets are aligned to relate to same dates and times. For each satellite data vector, there is a vector of length 5 with meteorological data, and a vector of length 120 with measurement data for the period during which measurements are taken.

*Step 2.2*: Batches of monthly sequences are created. In each batch, there are 6 satellite data tensors with a total of five distinct dates, 6 weather data vectors with a total of 30 distinct dates and 6 sensor data vectors with a total of 720 distinct timestamps.

*Step 2.3*: Batches of monthly sequences are utilised to train CycleGAN network. The RNN output always has the same structure as the remote sensing data, but NDVI and NDMI indicator segments' values are amplified by the measurement data from sensors, i.e. sensor data are amalgamated into remote sensing data. Unprocessed satellite data and weather data within the observation data should be identical between network input and output.

At the end, when the network is fully trained, information collected from on-site measurement data is stored within network parameters. When the network is fed only with remote sensing data, it can generate improved observations and therefore there is no need for further data collection with sensor measurements (Figure 3).

3.2.3 Phase C: Continuous operation and training - identification of irrigation activities

In this Phase, a Recurrent Neural Network (RNN) is a class of neural networks where connections between nodes form a guided graph along a time sequence.

This allows the network to display time dynamic behavior. Derived from feedforward neural networks, RNNs can use their internal state (memory) to process variable-length input sequences. Phase C involves the following steps:

- *Step 3.1*: Initial remote sensing is generated, including a dataset from meteorological data vector sequences.
- *Step 3.2*: Initial remote sensing data enter cycleGAN and an upgraded and improved remote sensing dataset is generated.
- *Step 3.3*: Enhanced observation data feed the recurring neural network (RNN) to generate an action command.
- *Step 3.4*: Improved remote sensing data and the action command are fed into the VAE-variational autoencoder algorithm and thus the new/ next state is created. VAE is a neural network trained using an unsupervised method, where remote sensing data and an action command are given new remote sensing data are resulted.
- *Step 3.5*: The next state is fed to the reward function and thus the reward is created. The reward function consists of two parts. The first part gives a positive reward if the NDVI and NDMI values are within a predetermined range and a negative reward if they are outside this range. The second part punishes the agent if it uses extensive amounts of water and if it produces frequent irrigation instructions. Both sections are integrated as a single reward for simultaneous training of the network to maintain soil moisture in a healthy range, with the minimum amount of water applied to the most efficient number of irrigations.
- *Step 3.6*: The new improved remote sensing data, together with energy, reward and next status, are stored in the replay buffer.
- *Step 3.7*: In the next situation, meteorological data are replaced by the actual new meteorological data provided by the relevant external source. Thus, a new sensing campaign is generated.
- *Step 3.8*: The new overview data re-feed cycleGAN input and the cycle continues to repeat for a predetermined number of steps.
- *Step 3.9*: When the cycle is complete, data collected in the replay buffer are used to train the recurring neural network (RNN). During the training process, the RNN configuration is updated in such a way as to maximize the reward.

When training is completed, a new cycle of simulations begins and new data is collected in the iteration memory and the network is further trained.

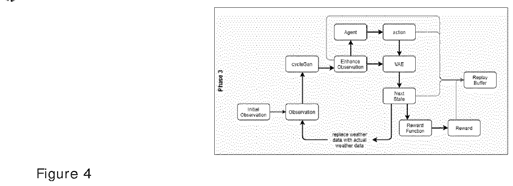

VAE (Welling, 2014) (Wierstra, 2014) networks are automatic probabilistic encoders. A VAE matches its input data to the parameters of a probabilistic distribution, such as mean/ average and variance. It can create a continuous structured latent dataset, i.e. a data set that is not directly observed but inferred from others that are observed. This makes them ideal for creating synthetic data to be used as a transition function within a reinforcement learning framework (Figure 4).

References

Efros, J.-Y. Z. (2020). Unpaired Image-to-Image Translation using Cycle-Consistent Adversarial Networks. Retrieved from https://arxiv.org/abs/1703.10593#

Welling, D. P. (2014). Auto-Encoding Variational Bayes. Retrieved from https://arxiv.org/abs/1312.6114

Wierstra, D. J. (2014). Stochastic Backpropagation and Approximate Inference in Deep Generative Models. Retrieved from https://arxiv.org/abs/1401.4082

**Claims**

1. Economical method for determining the quantity and time of irrigation, based on observation data (remote sensing and meteorological), in order to achieve ideal soil moisture conditions for crops, so as not to require gradual on-site measurements, which includes the following phases:

   - Phase A: Data Collection and Preparation
   - Phase B: Initial System Training
   - Phase C: Continuous operation and training - identification of irrigation activities

   **Characterized by** the property that it is performed on a technical infrastructure (System), including includes specific types of subsystems, in which the actions included in the steps defined in each phase are performed. Main activities concern the initial and continuous training of specific types of neural networks that perform functions for improving observation datasets, and extracting optimal irrigation commands, given in automatic controlled flow irrigation systems.

   1.1. Dependent claim 1.1
   Method used to optimize the accuracy of terrestrial remote sensing data using cycleGAN algorithms

   1.2. Dependent claim 1.2
   Method applied as a transition function to the environment for initialization of reinforcement learning algorithm

   1.3. Dependent claim 1.3
   Method of using an enhanced learning algorithm for training a recurring neural network, which generates commands for irrigation quantities and intervals.

2. Composition of a system comprising subsystems and means for the application of the method according to claim 1, **characterized by** the property that it comprises the following subsystems:

   - S1. Electronic material module with integrated electronic processing units, scalable in line with the cultivated area size, placed in a protection box (Measurements Unit), connected to an array of analog sensors. Data from various measurement units are directed to a routing unit, through which they are transferred to the Internet and then to S4.
   - S2. Analog sensor arrays that are placed in the ground for data acquisition.
   - S3. Wide Area Network consisting of a local area wireless network and an internet access network or a cloud computing infrastructure.
   - S4. Computational Processing Unit, which is installed in the form of a virtual machine - VM (or an array of VMs) in a Cloud Computing Infrastructure (CCI), in which the Database stores the data and executes necessary algorithms for the application of the method.
   - S5. Irrigation Management Unit. Connected through the internet or through S3 with one or more standard electronic valves controlling irrigation flows.

Figure 1

Figure 2

Figure 3

Figure 4

Europäisches
Patentamt

European
Patent Office

Office européen
des brevets

# EUROPEAN SEARCH REPORT

Application Number

EP 21 02 0540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/383284 A1 (LARSEN RUDY LARS [US]) 10 December 2020 (2020-12-10) * paragraphs [0003], [0008] – [0013], [0029], [0030], [0032] – [0096]; figures 1-7,9 * | 1,2 | INV. A01G25/16 |
| Y | EFREMOVA NATALIA ET AL: "Biophysical Parameter Estimation Using Earth Observation Data in a Multi-Sensor Data Fusion Approach: CycleGAN", 2021 IEEE INTERNATIONAL GEOSCIENCE AND REMOTE SENSING SYMPOSIUM IGARSS, IEEE, 11 July 2021 (2021-07-11), pages 5965-5968, XP033984692, DOI: 10.1109/IGARSS47720.2021.9553561 [retrieved on 2021-09-29] * the whole document * | 1,2 | |
| A | THARANI PAVITHRA P ET AL: "An Analysis on Application of Deep Learning Techniques for Precision Agriculture", 2021 THIRD INTERNATIONAL CONFERENCE ON INVENTIVE RESEARCH IN COMPUTING APPLICATIONS (ICIRCA), IEEE, 2 September 2021 (2021-09-02), pages 1538-1545, XP033979345, DOI: 10.1109/ICIRCA51532.2021.9544865 [retrieved on 2021-09-21] * the whole document * | 1,2 | TECHNICAL FIELDS SEARCHED (IPC) A01G |

The present search report has been drawn up for all claims

| Place of search | Date of completion of the search | Examiner |
|---|---|---|
| The Hague | 11 April 2022 | Dagnelies, Joëlle |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 21 02 0540**

This annex lists the patent family members relating to the patent documents cited in  the above-mentioned European search report.
The members are as contained in the European Patent Office EDP file on
The European Patent Office is in no way liable for these particulars which are merely given for the purpose of information.

**11-04-2022**

| Patent document cited in search report | Publication date | Patent family member(s) | Publication date |
|---|---|---|---|
| US 2020383284    A1 | 10-12-2020 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHAWLA, I. ; KARTHIKEYAN, L. ; MISHRA, A. K.** A review of remote sensing applications for water security: quantity, quality, and extremes. *Journal of Hydrology,* 2020, vol. 30, 124826
- **H. E. BECK ; M. PAN ; D. MIRALLES et al.** *Hydrology and Earth System Sciences,* May 2020
- **ZHU et al.** Unpaired Image-to-Image Translation using Cycle-Consistent Adversarial Networks. *IEEE Xplore, International Conference on Computer Vision,* 2017, https://arxiv.org/pdf/1703.10593.pdf
- **EFROS, J.-Y. Z.** *Unpaired Image-to-Image Translation using Cycle-Consistent Adversarial Networks,* 2020, https://arxiv.org/abs/1703.10593#
- **WELLING, D. P.** *Auto-Encoding Variational Bayes,* 2014, https://arxiv.org/abs/1312.6114
- **WIERSTRA, D. J.** *Stochastic Backpropagation and Approximate Inference in Deep Generative Models,* 2014, https://arxiv.org/abs/1401.4082